## Europäisches Patentamt

## European Patent Office

## Office européen des brevets

(19)

(11) Veröffentlichungsnummer: **0 241 927**
**A1**

(12) **EUROPÄISCHE PATENTANMELDUNG**

(21) Anmeldenummer: **87105592.7**

(51) Int. Cl.⁴: **H 01 B 1/22,** H 01 B 1/24

(22) Anmeldetag: **15.04.87**

(30) Priorität: **18.04.86 DE 3613060**

(43) Veröffentlichungstag der Anmeldung: **21.10.87**
**Patentblatt 87/43**

(84) Benannte Vertragsstaaten: **AT BE CH DE ES FR GB IT LI NL SE**

(71) Anmelder: **Herberts Gesellschaft mit beschränkter Haftung, Christbusch 25, D-5600 Wuppertal 2 (DE)**

(72) Erfinder: **Krauthäuser, Helmut, Steinkauzweg 37, D-5000 Köln 30 (DE)**
Erfinder: **Joecker, Edgar, Kuchhauserstrasse 41, D-5600 Wuppertal 12 (DE)**

(74) Vertreter: **Türk, Gille, Hrabal, Bruckner Strasse 20, D-4000 Düsseldorf 13 (DE)**

(54) **Überzugsmittel mit hoher elektrischer Leitfähigkeit und dessen Verwendung zur Herstellung von Überzügen.**

(57) Beschrieben wird ein Überzugsmittel mit hoher elektrischer Leitfähigkeit, das elektrisch leitfähiges Pigmentpulver mit einer Teilchengröße von weniger als 300 μm, Bindemittel, Löse- oder Verdünnungsmittel und gegebenenfalls übliche lacktechnische Zusatzstoffe enthält. Das Überzugsmittel weist pro 100 Gew.-Teile Bindemittel (Festkörper) 20 bis 500 Gew.-Teile versilbertes Kupferpulver mit einem Silberanteil von 5 bis 20 Gew.-% und 20 bis 400 Gew.-Teile Graphitpulver auf. Beschrieben wird auch die Verwendung des Überzugsmittels zur Herstellung von Überzügen, insbesondere auf Kunststoffsubstrat.

Anmelder: Herberts Gesellschaft mit beschränkter Haftung

Christbusch 25, 5600 Wuppertal 2

**Überzugsmittel mit hoher elektrischer Leitfähigkeit
und dessen Verwendung zur Herstellung von Überzügen**

Die Erfindung betrifft ein Überzugsmittel mit hoher
elektrischer Leitfähigkeit, enthaltend elektrisch
leitfähiges Pigmentpulver mit einer Teilchengröße
von weniger als 300 µm, Bindemittel, Löse- oder
Verdünnungsmittel und gegebenenfalls übliche lacktechnische Zusatzstoffe.

Derartige Überzugsmittel mit elektrisch leitfähigen
Pigmentpulvern, die die daraus hergestellten Überzüge
elektrisch leitfähig machen, sind bekannt. Beispielsweise wurden Überzugsmittel hergestellt durch Dispergieren
von Kupferteilchen in einem Bindemittelharz oder einer
Lösung eines Bindemittelharzes. Derartige Überzugsmittel
wiesen jedoch den Nachteil auf, daß während der Lagerung
und während des Gebrauchs das Kupferpulver oxidiert wurde,
wodurch sich die elektrischen Eigenschaften veränderten.
Dies konnte so weit führen, daß ein leitender Überzug seine
elektrische Leitfähigkeit verlor und zu einem Isolator wurde.

Um diese unerwünschte Eigenschaft von Kupferpulver enthaltenden, elektrisch leitfähigen Überzügen zu überwinden wurde
versucht auf Ersatzmaterialien auszuweichen, die anstelle
des leitfähigen Kupferpulvers Edelmetallpulver oder Nickelpulver enthielten. Jedoch war dies auch kein zufriedenstellender Lösungsweg. Edelmetallpulver, wie Pulver aus Silber, Gold
und Platin erwiesen sich als äußerst kostspielig und waren
daher aus wirtschaftlichen Gründen nicht akzeptabel. Bei der

-2-

Verwendung von Nickelpulver mußten aufgrund der kanzerogenen Wirkung Gesundheitsschäden bei der Herstellung, der Verarbeitung und der erhaltenen Endprodukte in Kauf genommen werden.

Die vorliegende Erfindung hat sich daher die Aufgabe gestellt kostengünstige Überzugsmittel bereit zu stellen, die zu keinen Gesundheitsrisiken führen und zu Überzügen bzw. Beschichtungen verarbeitbar sind, die eine hohe elektrische Leitfähigkeit aufweisen und unverändert beibehalten.

Überraschenderweise hat es sich gezeigt, daß diese Aufgabenstellung dadurch gelöst werden kann, daß als elektrisch leitfähiges Pigmentpulver zur Herstellung der Überzugsmittel eine Mischung aus versilbertem Kupferpulver und elektrisch leitfähigem Graphitpulver (Elektrographit) verwendet wird.

Gegenstand der Erfindung ist demgemäß ein Überzugsmittel mit hoher elektrischer Leitfähigkeit, enthaltend elektrisch leitfähiges Pigmentpulver mit einer Teilchengröße von weniger als 300 µm, Bindemittel, Löse- oder Verdünnungsmittel und gegebenenfalls übliche lacktechnische Zusätze, das dadurch gekennzeichnet ist, daß es auf 100 Gew.-Teile Bindemittel (berechnet als Festkörper) 20 bis 500 Gew.-Teile versilbertes Kupferpulver mit einem Silberanteil von 5 bis 20 Gew.-% und 20 bis 400 Gew.-Teile Graphitpulver enthält.

Es hat sich gezeigt, daß ein derartiges Überzugsmittel frei von den Nachteilen des Stands der Technik ist und zu Überzügen bzw. Beschichtungen mit hoher elektrischer Leitfähigkeit führt, die unverändert beibehalten wird. Es hat sich gezeigt, daß das Überzugsmittel besonders geeignet ist zur Beschichtung von Kunststoffen.

Gegenstand der Erfindung ist daher auch die Verwendung des vorstehend definierten elektrisch leitfähigen Überzugsmittels zur Herstellung von Überzügen bzw. Beschichtungen, dies
insbesondere auf Kunststoffsubstraten.

Im Rahmen des erfindungsgemäßen Überzugsmittels werden
20 bis 500 Gew.-Teile und bevorzugt 20 bis 200 Gew.-Teile
versilbertes Kupferpulver und 20 bis 400 Gew.-Teile, bevorzugt 20 bis 150 Gew.-Teile Graphitpulver pro 100 Gew.-Teile
Bindemittel (Feststoffbasis) eingesetzt.

Das Gewichtsverhältnis zwischen versilbertem Kupferpulver
und Graphitpulver liegt bevorzugt im Bereich von 0,5:1-3:1
und besonders bevorzugt im Bereich von 1:1-2:1.

Bei dem erfindungsgemäß verwendeten versilberten Kupferpulver
handelt es sich um ein Kupferpulver, das mit einem Anteil von
5 bis 20 Gew.-% Silber versilbert ist. Derartige Pulver sind
im Handel erhältlich, beispielsweise unter der Handelsbezeichnung "Kontaktargan".

Das versilberte Kupferpulver kann eine Teilchengröße von weniger
als 300 μm aufweisen, wobei es möglich ist, daß beispielsweise
95 % eine Teilchengröße unter 200 μm insbesondere unter 100 μm
haben. Besonders bevorzugt weist das versilberte Kupferpulver eine
Teilchengröße im Bereich von 20 bis 65 μm auf; ein besonders bevorzugter Wert liegt bei 20 bis 40 μm. Es ist besonders günstig,
wenn die Hauptmenge des Kupferpulver bei dem letztgenannten Wert
von 20 bis 40 μm liegt.

Als Graphitpulver können leitfähige Graphitpulver insbesondere
unter der Bezeichnung Elektrographit verwendet werden, wie sie
im Handel üblich sind. Das Graphitpulver kann              ebenfalls eine Teilchengröße von weniger als 300 μm aufweisen, wobei bevorzugt ebenfalls 95 % eine Teilchengröße unter 200 μm
insbesondere unter 100 μm haben. Ein besonders bevorzugter Bereich für das Graphitpulver liegt bei bis zu 45 μm, beispielsweise bei 5 bis 45 μm, wobei innerhalb dieses Bereiches unter
20 μm, beispielsweise 5 bis 20 μm besonders bevorzugt sind. Insbesondere liegt besonders bevorzugt die Hauptmenge des Graphitpulvers bei einer Größenordnung von 5 bis 20 μm.

Bevorzugt ist eine Kombination von versilberten Kupferteilchen bzw. Graphitteilchen, wobei das Graphitpulver einen geringeren Korngrößenbereich aufweist als das versilberte Kupferpulver. So ist beispielsweise eine Kombination von versilbertem Kupferpulver mit einer Korngröße von 20 bis 65 /um, bevorzugt 20 bis 40 /um mit Graphitpulver mit einem Korngrößenbereich von 5 bis 45 /um, bevorzugt 5 bis 20 /um, besonders günstig.

Es hat sich gezeigt, daß überraschenderweise eine Kombination von versilbertem Kupferpulver mit Graphit, insbesondere im vorstehenden Korngrößenbereich und insbesondere wenn die Korngrößen des Graphits geringer als die des versilberten Kupferpulvers sind, zu einem verbesserten Abschirmeffekt führt. Dieser Abschirmeffekt ist besser als er bei der Verwendung von einer entsprechenden Menge an versilbertem Kupferpulver allein, ohne Graphitzusatz, erzielt wird.

Als Bindemittel können in den erfindungsgemäßen Zusammensetzung übliche Bindemittelmaterialien eingesetzt werden, wie sie beispielsweise auf dem Gebiet von Überzugsmittel mit elektrisch leitfähigen Teilchen eingesetzt werden. Beispiele für derartige Bindemittel sind Acrylate und Methacrylate thermoplastischer und vernetzender Natur, Polyester (linear und vernetzend), Epoxiharze (duroplastische und vernetzende), Celluloseacetobutyrat, Polyvinylmischpolimerisate, mit Wasser verdünnbare Harze, Acrylat-Dispersionen, Polyurethan-Dispersionen und Styrol-Butadien-Dispersionen. Besonders geeignet sind Acrylate und Methacrylate, beispielsweise mit einem Molekulargewicht zwischen 30 000 und 60 000.

Die letztgenannten Acrylate und Methacrylate mit relativ niedrigem Molekulargewicht haben sich als besonders geeignet erwiesen, insbesondere dann, wenn die vorstehend aufgeführten bevorzugten Korngrößenbereiche von 20 bis 65 /um für das versilberte Kupferpulver und von 5 bis 45 /um für das Graphitpulver in Kombination eingesetzt werden. Wie vorstehend erwähnt, sind die hierfür besonders günstigen Korngrößenbereiche 20 bis 40 /um für das versilberte Kupferpulver bzw. 5 bis 20 /um für das Graphitpulver.

bevorzugt eine Trockenfilmstärke von weniger als 100 μm, besonders bevorzugt von weniger als 50 μm erzielt wird.

Besonders geeignet sind die erfindungsgemäßen Überzugsmittel zur Beschichtung von Kunststoffsubstraten. Sie können direkt auf derartige Substrate aufgetragen werden oder kann der Auftrag nach/Behandlung mit einem geeigneten Haftgrund erfolgen. Geeignete Kunststoffsubstrate, die direkt mit den erfindungsgemäßen Überzugsmitteln lackiert werden können, sind beispielsweise Polystyrol (PS), thermoplastischer Schaum- guß (TSG), Polycarbonat, Polyacrylnitril, nachchloriertes PVC und Acrylnitril-Butadien-Styrol-Copolymere (ABS).

Durch die mit den aus den erfindungsgemäßen Überzugsmitteln herstellbaren Beschichtungen wird eine gute elektrische Leitfähigkeit erzielt, die beispielsweise zum Schutz gegen den Aufbau von elektromagnetischen Interferenzen (EMI) dient. Dieser Schutz wird durch die erzielte gute Ableitfähigkeit bewirkt. Beispielsweise lassen sich so elektronische Baugruppen oder elektronische Geräte schützen, die ein Kunststoffgehäuse aufweisen, z.B. Telefonapparate oder auch Parabolspiegel von Antennenanlagen, z.B. für den Satellitenempfang von Fernsehübertragungen. Die erfindungsge- mäßen Überzugsmittel sind jedoch auch für alle anderen üblichen Verwendungszwecke geeignet, für die elektroleitfähige Überzugsmittel eingesetzt werden.

Die durch die erfindungs- gemäßen Mittel erzielbaren Überzuge weisen eine gute elektrische Leitfähigkeit auf, die keinem Abbau durch Oxidation unterliegt. Die erfindungsgemäßen Mittel sind darüberhinaus sehr ergibig, da sie eine niedrige Dichte aufweisen. Im Vergleich mit nickel- haltigen Abschirmlacken wird das Gesundheitsrisiko verringert.

In den folgenden Beispielen wird als Graphitpulver (Elektrographit) handelsüblicher Elektrographit (Nr. 99,5, extrafein, mit einer Mahlfeinheit von 95 % feiner als 44 μm und 50 % feiner als/20 μm) verwendet. Als versilbertes Kupferpulver wird ein Handelsprodukt mit der Bezeichnung "Kontaktargan" mit einem Silbergehalt von mindestens 12 Gew.-% und einer Siebanalyse

Die Bindemittel können in üblichen Lösungs-und Verdünnungsmitteln gelöst werden. Beispiele für derartige Lösungs- bzw.
Verdünnungsmittel sind Ketone, Alkohole, Ester, Propylenglykolether, Monoethylglykolether, aromatische Lösungsmittel
und Wasser (wie voll entsalztes Wasser). Die Lösungsmittel
können allein oder im Gemisch verwendet werden.

Die erfindungsgemäßen Überzugsmittel können übliche lacktechnische Zusatzstoffe bzw. Hilfsmittel enthalten, wie sie dem
Fachmann geläufig sind. Beispiele für derartige Zusatzstoffe
sind Netzmittel, Trockenstoffe, Antischaummittel, Entgasungsmittel, Verdickungs- und Thixotropiermittel, Härter, Beschleuniger usw..

Der Lösungsmittelanteil in der erfindungsgemäßen Überzugszusammensetzung bestimmt sich nach dem gewünschten Verwendungszweck und der gewünschten Auftragsmethode. Beispielsweise ist
ein Gew.-Anteil von 40 bis 60 % der Gesamtrezeptur an Lösungsmitteln geeignet.

Die erfindungsgemäßen Überzugszusammensetzungen können durch
einfaches Vermischen der Bestandteile erhalten werden. Beispielsweise kann man dabei so vorgehen, daß die gewünschte Bindemittelmenge in dem Lösungsmittel gelöst wird, worauf versilbertes Kupferpulver und Graphitpulver sowie gegebenenfalls
weitere Zusätze in die erhaltene Lösung eingerührt werden.

Die erfindungsgemäßen Überzugszusammensetzungen können auf
verschiedene Substrate in verschiedener Weise aufgetragen werden.
Sie sind besonders geeignet für den Spritzauftrag, jedoch kann
der Auftrag beispielsweise auch durch Aufbürsten, Tauchen usw.
erfolgen. Der Auftrag erfolgt in einer derartigen Menge, daß

-7-

von > 63 µm maximal 1 % und > 40 µm maximal 15 % eingesetzt.
Bei dem eingesetzten Graphitpulver und versilbertem Kupferpulver handelt es sich erfindungsgemäß um bevorzugt einsetzbare Materialien.

In den folgenden Beispielen beziehen sich Teile auf das Gewicht, sofern nicht anders angegeben.

Beispiel 1

Herstellung einer leitfähigen Überzugsmasse auf der Basis
von Celluloseacetobutyrat  (CAB).
14,2 Teile Acetobutyrat 381-01 wurden in 53,6 Teilen Butylacetat gelöst. Anschließend wurden 14,2 Teile Elektrographit
und 18,0 Teile Kontaktargan eingerührt.
Ein aus dem erhaltenen Überzugsmittel hergestellter Film mit
einer Trockenschichtstärke von 50 µm wies nach der Trocknung
über Nacht einen Widerstand von 7 Ohm auf.

Beispiel 2

Herstellung eines Überzugsmittels auf der Basis von Polyvinylchlorid-Mischpolimerisat:

13,9 Teile Laroflex MP 45 wurden in 23,0 Teilen Xylol und
30,9 Butylacetat gelöst. Wie in Beispiel 1 wurden 14,2 Teile
Elektrographit und 18,0 Teile Kontaktargan eingerührt.

Ein aus dem Überzugsmittel hergestellter Film mit einer Trockenschichtstärke von 50 µm wies   nach Trocknung über Nacht einen
Widerstand von 32 Ohm auf.

Beispiel 3:  Herstellung eines Überzugsmittels auf Polyurethanbas:

| | |
|---|---:|
| Witcobond W234 | 50,0 |
| Kontaktargan | 18,0 |
| Elektrographit | 14,2 |
| Butylglykol | 2,0 |
| VE-Wasser (voll entsalztes Wasser) | 15,8 |
| | 100,0 |

Herstellungsverfahren wie Beispiel 1

Ergebnis für einen aufgebrachten Film von 50 µm Trockenschichtstärke
nach Trocknung über Nacht

10 Ohm Widerstand

Beispiel 4:  Herstellung eines Überzugsmittels auf der Basis einer
Acryl-Dispersion

| | |
|---|---:|
| Mowilith LDM 7760 | 35,1 |
| Butylglykol | 10,0 |
| Kontaktargan | 18,0 |
| Elektrographit | 14,2 |
| Butylacetat | 12,0 |
| VE-Wasser | 10,7 |
| | 100,0 |

Herstellungsverfahren wie Beispiel 1

Ergebnis für einen aufgebrachten Film von 50 µm Trockenschichtstärke
nach Trocknung über Nacht

25 Ohm Widerstand

-9-

**Beispiel 5:** Herstellung eines Überzugsmittels auf der Basis
eines schwach vernetzenden Epoxiharzes

| | |
|---|---|
| Epikote 1001/75 | 16,5 |
| Diacetonalkohol | 10,0 |
| Elektrographit | 14,2 |
| Kontaktargan | 18,0 |
| Xylol | 15,0 |
| Äthylglykolacetat | 26,3 |
| | 100,0 |

Mischen 100 : 2 mit Versamid 100

Herstellungsverfahren wie Beispiel 1

Ergebnis für einen aufgebrachten Film von 50 µm Trockenschichtstärke
nach Trocknung über Nacht

240 Ohm Widerstand

**Beispiel 6:** Herstellung eines Überzugsmittels auf der Basis eines
linearen Polyurethans

| | |
|---|---|
| Uraflex 103 B SX 30 | 48,0 |
| Äthylglykolacetat | 10,0 |
| Elektrographit | 14,2 |
| Kontaktargan | 18,0 |
| Xylol | 5,0 |
| Butylacetat | 4,8 |
| | 100,0 |

Herstellungsverfahren wie Beispiel 1

Ergebnis für einen aufgebrachten Film von 50 µm Trockenschichtstärke
nach Trocknung über Nacht

80 Ohm Widerstand

-10-

**Beispiel 7:** Herstellung eines Überzugsmittels auf der Basis eines
vernetzenden Acrylharzes

| | |
|---|---|
| Macrynal SM 540 | 20,0 |
| Xylol | 26,8 |
| Elektrographit | 14,2 |
| Kontaktargan | 18,0 |
| Butylacetat | 21,0 |
| | 100,0 |

Härten MV 100 : 3 mit Desmodur N 75

Herstellung wie Beispiel 1

Ergebnis für einen aufgebrachten Film von 50 μm Trockenschichtstärke
nach Trocknung über Nacht


50 Ohm Widerstand


**Beispiel 8:** Herstellung eines Überzugsmittels auf der Basis eine
vernetzenden Polyurethan

| | |
|---|---|
| Desmophen 650/50 % | 18,0 |
| Desmophen 670/75 % | 1,5 |
| Äthylglykolacetat | 12,0 |
| Elektrographit | 14,2 |
| Kontaktargan | 18,0 |
| Butylacetat | 21,0 |
| Xylol | 15,3 |
| | 100,0 |

Härten MV 100 : 6 Desmodur N 75

Herstellung wie Beispiel 1

Ergebnis für einen aufgebrachten Film von 50 μm Trockenschichtstärke
nach Trocknung über Nacht


240 Ohm Widerstand

Beispiel 9: Herstellung eines Überzugsmittels auf der Basis
eines Acrylharzes

| | |
|---|---:|
| Neocryl B 805 | 14,2 |
| Butylacetat | 30,0 |
| Methylisobutylketon | 8,0 |
| Cyclohexanon | 8,0 |
| Elektrographit | 14,2 |
| Kontaktargan | 18,0 |
| Methoxypropanol | 7,6 |
| | 100,0 |

Herstellungsverfahren wie Beispiel 1

Ergebnis für einen aufgebrachten Film von 50 µm Trockenschichtstärke
nach Trocknung über Nacht

1 Ohm Widerstand

0241927

Patentansprüche:

1. Überzugsmittel mit hoher elektrischer Leitfähigkeit enthaltend elektrisch leitfähiges Pigmentpulver mit einer Teilchengröße von weniger als 300 µm, Bindemittel, Löse- oder Verdünnungsmittel und gegebenenfalls übliche lacktechnische Zusatzstoffe, d a d u r c h g e k e n n z e i c h n e t , daß es auf 100 Gew.-Teile Bindemittel (Festkörper) 20 bis 500 Gew.-Teile versilbertes Kupferpulver mit einem Silberanteil von 5 bis 20 Gew.-% und 20 bis 400 Gew.-Teile Graphitpulver enthält.

2. Überzugsmittel nach Anspruch 1, dadurch gekennzeichnet, daß es auf 100 Gew.-Teile Bindemittel (Festkörper) 20 bis 200 Gew.-Teile versilbertes Kupferpulver und 20 bis 150 Gew.-Teile Graphitpulver enthält.

3. Überzugsmittel nach Anspruch 1 oder 2, dadurch gekennzeichnet, daß das Gewichtsverhältnis zwischen dem versilberten Kupferpulver und Graphitpulver im Bereich 0.5 : 1 bis 3 : 1 liegt.

4. Überzugsmittel nach Anspruch 3, dadurch gekennzeichnet, daß das Gewichtsverhältnis zwischen dem versilberten Kupferpulver und Graphitpulver im Bereich 1 : 1 bis 2 : 1 liegt.

0241927

5. Verwendung der Überzugsmittel nach einem der Ansprüche 1 bis 4 zur Herstellung von Überzügen.

6. Verwendung nach Anspruch 5 zur Herstellung von Überzügen für Kunststoffgehäuse elektronischer Geräte.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 161 805 (ELECTRO MATERIALS) * Patentansprüche 1-14 * | 1 | H 01 B 1/22 H 01 B 1/24 |
| | --- | | |
| A | GB-A- 978 606 (CHOMERICS) * Patentansprüche 1-9 * | 1 | |
| | --- | | |
| A | FR-A-2 009 209 (CHOMERICS) * Patentansprüche 1-20 * | 1 | |
| | ----- | | |

RECHERCHIERTE SACHGEBIETE (Int. Cl.4)

H 01 B 1/00

Der vorliegende Recherchenbericht wurde für alle Patentansprüche erstellt

| Recherchenort | Abschlußdatum der Recherche | Prüfer |
|---|---|---|
| DEN HAAG | 24-07-1987 | DROUOT M.C. |